(19) Europäisches Patentamt / European Patent Office / Office européen des brevets

(11) **EP 2 367 306 A1**

(12) # EUROPEAN PATENT APPLICATION

(43) Date of publication:
**21.09.2011 Bulletin 2011/38**

(51) Int Cl.:
***H04B 10/26*** *(2006.01)*

(21) Application number: **10382063.5**

(22) Date of filing: **18.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicants:
• **Alcatel Lucent**
  **75007 Paris (FR)**
• **Universitat Politècnica de Catalunya**
  **08034 Barcelona (ES)**
• **Kehayas, Efstratios**
  **14569 Attiki (GR)**
• **Bakopoulos, Paraskevas**
  **16452 Athens (GR)**

(72) Inventors:
• **Schrenk, Bernhard**
  **08034 Barcelona (ES)**

• **Kehayas, Efstratios**
  **14569 Attiki (GR)**
• **Bakopoulos, Paraskevas**
  **16452 Athens (GR)**
• **Lazaro Villa, José Antonio**
  **08026 Barcelona (ES)**
• **Prat Gomá, Josep Joan**
  **08190 Barcelona (ES)**
• **Kazmierski, Christophe**
  **91460 Marcoussis (FR)**

(74) Representative: **Elzaburu Marquez, Alberto**
  **Elzaburu S.L.P.**
  **Miguel Angel 21**
  **28010 Madrid (ES)**

Remarks:
Amended claims in accordance with Rule 137(2) EPC.

(54) **Optical network unit**

(57)   An optical network unit comprise receivers for the downstream and reflective modulators using the downstream signals for the upstream transmission, after being optically processed by means of optical downstream suppression for enabling remodulation of the downstream signal with upstream data.

**FIG 2**

## Description

### FIELD OF THE INVENTION

The present invention relates to a receiving optical apparatus and, more particularly but not exclusively, a reflective modulator that reuses a single wavelength in a bi-directional optical link with an upstream optical signal.

### BACKGROUND

Optical fibre communications is one of the drivers to enable broadband services to be delivered by an operator to the customers that can be spread over larger geographic areas. Optical fibre is used as transmission medium because it offers several advantages compared to the copper wires, such as the traditional twisted pair. Fiber-to-the-X FTTx technology, wherein X can stand for Curb, Node, Building, Home or any other; has been extensively studied worldwide, for delivering high bandwidth to users and for converging wireless and wireline.

An important point for FTTx is the capability for building future-proof broadband networks with low installation and operating expenditures. While active optical networks AONs exist, taking advantage of repeaters and switched for reach extension and routing, passive optical networks PONs are also gaining attention due to the fact that no active components are deployed in the distribution plant between the operator and the customers. In this way, cost deriving from maintenance of active devices can be kept low as they are situated either at the central office of the provider or located at the customer premises.

The capacity and number of served users can be expanded by taking multiplexing technologies into account into the architecture of the access network AN, regardless if it is of active or passive nature. As the optical fibre is suitable to transmit on multiple optical frequencies, wavelength division multiplexing WDM can lead to a significant improvement in cost and capacity, as fibre infrastructure can be shared between the customers while more data signals can be transmitted on different wavelengths. This kind of AN has an optical multiplexer situated between the operator and its customers, and is herein referred to as a WDM-AN.

Furthermore, each wavelength can for the case of a so-called hybrid AN be divided into time slots by means of time division multiplexing TDM for splitting the signal in its power to a bunch of customers instead of only one. Although this procedure leads to a reduction in the data rate per user, the naturally high data rates that can be achieved for each wavelength thanks to the maturity of optical transmitters ensures that the net data rates for the single customers still stay high. This kind of AN has in addition to the multiplexer of the WDM-AN a power splitter located at each output of the multiplexer, while the customers are connected to the outputs of the power splitter. Such a AN is herein referred to as a WDM/TDM-AN.

Expanding the AN by multiplexing means that the cost can be reduced due to a shared infrastructure at the fibre distribution plant and also at the central office of the network operator, referred to as the optical line terminal OLT herein, where several light sources and expensive equipment such as modulators and devices for signal conditioning are located. One requirement for introducing multiplexing into the AN is to keep the customer premises equipment, referred to as the optical network unit ONU herein, agnostic to these multiplexing techniques. A reflective design without active optical source or a design with a tunable optical source allows to have one single ONU, which can be used at any position inside the AN, i.e. the ONU is operable with different wavelengths and at different ports or a power splitter. Such a design that is suitable for mass deployment of ONU ensures cost effectiveness as the ONU will determine the expenditures for an AN with a high number of users.

The use of reflective modulators integrated together with optical amplifiers at the customer premises is a promising solution for the ONU. In this way, the loss over the network can be overcome while imprinting upstream transmission data on the incoming signal. An efficient AN uses a single wavelength as optical input signal for an ONU, which carries the data transmission from the OLT, referred to as the downstream, and also the data transmission from the ONU back towards the OLT, referred to as the upstream. These two data streams are present at the same time due to the bi-directional nature of communication.

Realistic deployment of the access networks discussed above, require ONUs that are not wavelength-dependent, also referred to as colourless, and are capable of re-using the same wavelength downstream signal for modulating the upstream data. Re-modulation of downstream can be achieved either by using orthogonal modulation formats, or by suppressing the downstream signal, before the optical carrier is again modulated with upstream data. Simple modulation formats such as binary or multi-level intensity modulation for both, down- and upstream, come at a reasonable cost for the ONU but afford a tradeoff between simplicity in reception and the difficulty to remove an already present pattern with high data rate at the ONU.

It is known that a reflective modulator are: the reflective semiconductor optical amplifier RSOA, the reflective electro-absorption modulator REAM or integrated versions of semiconductor optical amplifier SOA and reflective electro-absorption modulator REAM, where the SOA acts as amplifier to overcome also the losses of the REAM or any reflective active optical component capable of intensity modulating the upstream data signal.

### SUMMARY

This invention seeks to resolve or reduce one or more of the disadvantages described previously by means of a method for enabling bi-directional data communication using a single optical carrier and a single laser source with the aid of reflective modulator assisted by periodic optical filtering as defined in the claims.

A method for enabling bidirectional data communication using a single optical carrier modulated in intensity and an apparatus at user premises comprising of a receiving and transmitting optical system based on an optical receiver to receive the incident intensity modulated signal, a periodic filtering device that suppresses the modulation information of the incident intensity modulated signal for recovering an optical carrier, a modulator that modulates the said recovered optical carrier with data to establish a bidirectional data transmission.

An embodiment of an optical network unit comprise receivers for the downstream and reflective modulators using the downstream signals for the upstream transmission, after being optically processed by means of optical downstream suppression for enabling remodulation of the downstream signal with upstream data.

A periodic filtering device is adapted to adjust to the downstream data rate is situated before a remodulator unit but after a splitter unit that extracts part of the incoming signal into the optical network unit for downstream detection. The downstream is sent with intensity modulation and a specific modulation index.

The principle of operation of the periodic filtering device relies on its optical memory effect which in the time domain translates to light addition of the signal, filling the spaces in the bit stream, so that the envelope of the optical carrier is recovered. In the frequency domain, the narrow optical bandwidth of the filter recovers the optical carrier of the downstream, whereas the periodic transfer function allows for wavelength-independent operation on a given wavelength grid, such as the ITU WDM wavelength grid. The penalty in reception of the upstream that derives from an unsuppressed downstream pattern is therefore drastically reduced, allowing reusing the wavelength also for upstream transmission without taking orthogonal modulation formats into account. A photo detector such as a PIN diode, avalanche photo diode or a combination of semiconductor optical amplifier and PIN diode is used for downstream detection, and a remodulating device, which can be reflective but does not have to be necessarily, is used for upstream modulation of the recovered optical carrier after the periodic filtering device. A control loop may be used together with a tapped optical signal to provide a feedback to the periodic filtering device for stabilization of its operation point.

Two preferred embodiments for the optical network unit are considered, which depend on the periodic filtering device used inside the optical network unit. If the periodic filtering device is causing reflections back into the direction of the incident optical signal, it is referred to as a reflecting periodic filtering device. In this case, crosstalk with the upstream has to be prohibited by a proper design of the optical network unit. On the contrary, if the periodic filtering device is not causing reflections or reflections that are negligible, it is referred to as a non-reflecting periodic filtering device. The reflections of the non-reflective periodic filtering device have to be low enough so that the non-reflective periodic filtering device does not reduce the upstream quality by imperfections of its physical realization, for a specific realization of the optical network unit.

## BRIEF DESCRIPTION OF THE FIGURES

A more detailed explanation of the invention is given in the following description based on the attached figures in which:

figure 1 shows an access network showing one of its links, where data streams are modulated in their intensity, in which context an optical network unit enables the data transmission of upstream data by erasing the downstream pattern from the optical carrier at the customer premises by optical means,

figure 2 shows an optical network unit for high-quality upstream transmission in access networks with purely intensity modulated signals for both bit stream directions, including a reflective periodic filtering device and a control mechanism for stabilization of a periodic filtering device,

figure 3 shows another embodiment of an optical network unit for high-quality upstream transmission in access network with purely intensity modulated signals for both bit stream directions, including a non-reflective periodic filtering device and a control mechanism for stabilization of the periodic filtering device,

figure 4 shows a periodic filtering device with its physical properties, as it is included in the optical network unit of the access network,

figure 5 shows an embodiment of the reflective periodic filtering device, e.g. by implementing a Fabry-Perot interferometer as periodic filtering device,

figure 6 shows an embodiment of a non-reflective periodic filtering device, and

figure 7 shows an embodiment of the optical network unit for integration of the electro-optic elements in a chip.

## DESCRIPTION OF EMBODIMENTS

An optical transmission network including an optical line terminal OLT comprises optical sources for transmitting intensity modulated downstream data signals towards optical network units ONUs and also receivers for the reception of the upstream data transmitted by several ONUs; a fibre distribution plant, referred to as the optical distribution network ODN herein, comprising fibre to connect several units at the border of the ODN. It can also include at least one or more interconnecting points, referred to as the remote nodes RN, for relaying the data traffic from the OLT to the ONUs and backwards. These conjunction points between different segments of the ODN are not further specified; ONUs comprising receivers for the downstream and reflective modulators that use the downstream signals for the upstream transmission, after being optically processed by means of optical downstream suppression.

The ONU comprises periodic optical filtering of the downstream signal before the remodulator. This upstream remodulation method enables significant performance improvement in terms of sensitivity for the upstream reception at the OLT, while the extinction ratio of the downstream can be increased, thus improving at the same time the downstream reception at the ONU.

Considering the preferred embodiment of the present invention, modifications are required only at the ONU and do not perturb the fibre distribution plant nor the OLT, nor do other preferred embodiments of the present invention.

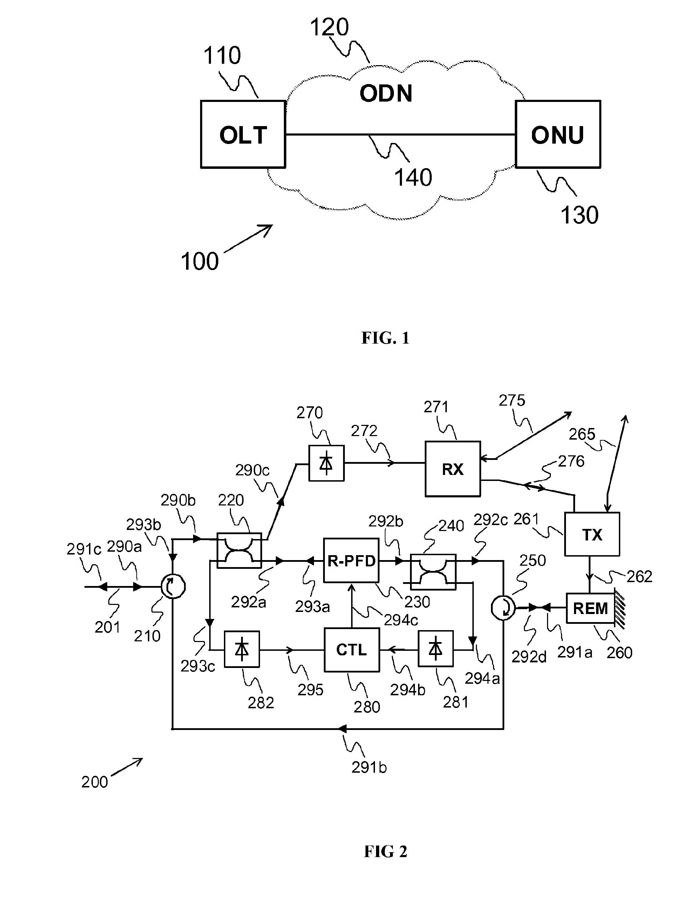

Reference is now made to figure 1 which illustrates an access network AN architecture 100, wherein AN 100 comprises an OLT 110, an ONU 130 that are connected via the ODN 120 which includes a bi-directional link 140. Signals originating from the OLT 110 towards the ONU 130 are referred to as downstream signals, while signals originating from the ONU 130 towards the OLT 110 are referred to as upstream signals.

In its simplest version of the AN 100, the ODN 120 consists essentially of a bi-directional link 140, which can be established by a single optical fibre. In an extended version, the ODN 120 would incorporate techniques of WDM and TDM as described before.

The OLT 110 includes the optical source of the AN 100 and an intensity modulator, used for imprinting the optical carrier with downstream data. The extinction ratio of the intensity modulation is adjusted to the given parameters in the AN to ensure optimum downstream and upstream performance in terms of fulfilling a figure or merit for the transmission in the AN 100. E.g., this can be a balanced power margin for downstream reception at the ONU 130 and upstream reception at the OLT 110. The bi-directional data transmission along the fibre link 140 has to be splitted/merged to the two unidirectional paths of the optical transmitter and receiver of the OLT 110, e.g. with the help of an optical circulator. The optical receiver of the OLT 110 includes further photo detectors such as PIN diodes or avalanche photo diodes.

Depending on the requirements inside the AN 100, the OLT 110 may further have other components such as optical amplifiers, means of dispersion compensation, optical WDM multiplexer/demultiplexer and electronic signal conditioning. The OLT 110 is capable to perform higher layer functionalities and is interconnected to an operator interface according to modern AN standards.

The ONU 130, hosted at the customer premises and responsible for downstream reception and upstream data transmission, is now discussed in more detail in its preferred embodiments of the present invention.

Reference is now made to Figure 2 illustrating an ONU 200 with a reflective periodic filtering device R-PFD that may cause reflections in backward direction, in accordance with the first preferred embodiment of the present invention.

The ONU 200 is connected by line 201 towards the ODN 120 of the AN 100. The flow of the optical signal is determined by circulators 210 and 250. The downstream is represented by 290(a, b, c) and the upstream by 291(a, b, c). A first optical coupler 220 which has a ratio that is optimized to the sensitivities of the optical receivers in ONU and OLT as well as to the margins for downstream and upstream reception, splits the downstream 290b into a part 290c that is detected by an optical receiver 270, and another part, referred to as the upstream carrier 292(a, b, c). The R-PFD 230 receives a part of the downstream 292a to which its spectral periodicity is adjusted. The physical realization contains therefore a tuning mechanism for modifying the spectral response of the R-PFD 230. A more detailed discussion of the realization and mechanism of the R-PFD will be given later in this description.

Due to intrinsic reflections of the R-PFD 230, a signal 293 propagates in backward directions through the coupler 220, which has a good directivity that prevents crosstalk with the downstream signal 290c at the input of the optical receiver 270. Although this reflected signal 290b reaches the circulator 210, it is blocked from the interconnection 201 with the ODN 110 due to the high directivity of the circulator 210.

To ensure stable operation, the R-PFD 230 is connected with a controller CTL 280 that adjusts the peaks of the spectral response of the R-PFD 230 with the spectrally enhanced components in the incoming downstream signal 292a. For that, the output signal 292b is split with an second optical coupler 240 into a big part 292c intended to be remodulated by upstream data, and a small part 294a that acts as a measure of performance for the optical envelope recovery of the output signal 292b, to create a control signal for aligning the R-PFD 230 via an electrical steering signal 294c. Alternatively, in another preferred embodiment of the control loop, the reflected signal 293c can be used to indicate the optimum position of the R-PFD 230 at the input of the CTL 280. This is possible when the reflected signal 293a shows an extremum when the R-PFD 230 is optimized in its spectral position. The optical photo receiver 270 does not cause any reflection that would interfere with signal 293c. Either signal 294a or 293c will be used, and if signal 293c is used, no optical coupler 240 is present in the ONU 200. Photo detectors 281 and 282 are delivering electronic signals 294b and 295 to the CTL 280. Photo detector 281 may be discarded if signal 294a is used for stabilizing the R-PFD 230, and conversely. The CTL 280 includes an electronic control circuit and an electrical driver circuit that is capable of driving the R-PFD 230 with an appropriate electrical signal 294c, depending on the physical realization of the R-PFD 230.

The remaining optical signal 292c has then an envelope that is optimized in its flatness, so that the downstream signal is erased with high quality and the upstream can be embedded. A circulator 250 connects the remodulator REM 260, which is reflective in this embodiment of the ONU. The enhanced optical carrier 292c is directed towards the REM 260 and appears as input signal 292d which is modulated with upstream data that is imprinted optically and appears at output signal 291a of the REM 260. It is not further specified which kind of device the REM 260 is supposed to be. Reflective components such as RSOA, REAM or integrated versions of SOA and REAM are possible candidates. The REM 260 may provide amplification of the incoming signal 292d.

The transmitter TX 261 contains high layer functionalities as well as adaptation of the electrical driving signal 262. Line 265 connects the TX 261 to the user interface according to a AN standard. The TX 261 is capable of driving the REM 260 in a proper way, including adaptation of the radio frequency data signal and adaptation of the bias point in terms of adjustment of the bias current and/or voltage for the REM 260.

The circulators 250 and 210 pass through the upstream data modulated signals 291a and 291b towards the ODN 120, where it appears as upstream signal 29 1 c.

The optical downstream receiver 270 contains a suitable photo detector, such as a PIN diode, avalanche photo diode or a combination of SOA and PIN diode. The detected electrical signal 272 is relayed to the electrical receiver RX 271 that contains several functionalities for signal conditioning and also from the higher layers. Line 275 connects the RX 271 to the user interface according to a AN standard. A direct interconnection 276 between RX 271 and TX 261 may be present for higher layer functionality such as signalling inside the AN.

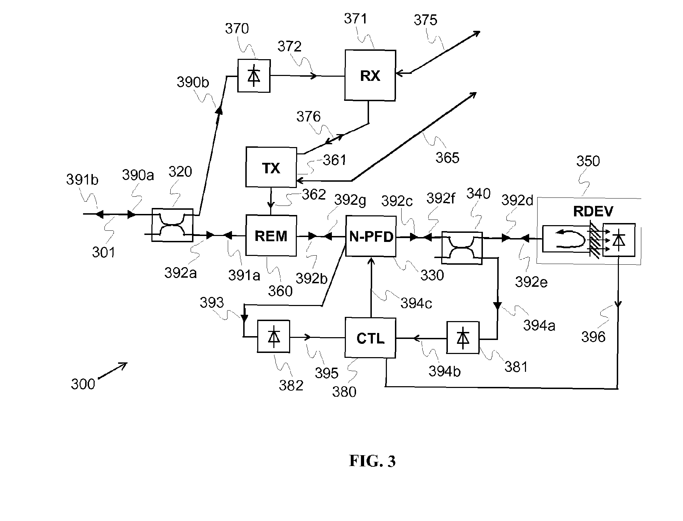

Reference is now made to Figure 3 illustrating an ONU 300 with a non-reflective periodic filtering device N-PFD that does not cause reflections in backward direction, in accordance with the second preferred embodiment of the present invention.

Line 301 connects the ONU 300 to the ODN 120 of the AN 100. The incoming downstream is represented by 390(a, b) and the upstream by 391 (a, b). An optical coupler 320 splits off a part of the downstream 390a and relays this part 390b to the optical photo receiver 370, which contains a photo detector such as a PIN diode, avalanche photo diode or a combination of SOA and PIN diode. The detected electrical signal 372 is fed to the electrical receiver 371. This in turn contains methods for electrical signal conditioning and higher layer functionalities. The interconnection to the user interface that is compliant with an AN standard is made via line 375.

The other part of the downstream signal is relayed as signal 392a to pass the REM 360. In this way, as the REM 360 is used in a bi-directional way, upstream data is already imprinted onto the remaining downstream. This modulated signal 392b enters the N-PFD 330, which causes only low reflections or no reflections at all.

The N-PFD 330 removes any patterning from the incoming signal 392b by taking advantage of its optical memory effect. The N-PFD 330 operates in a similar way as the R-PFD 230. A more detailed discussion of the realization and mechanism of the N-PFD will be given later in this description. Besides the downstream modulation, the upstream data that was imprinted on signal 392a is removed too. The output signal 392c of the N-PFD 330 has already a recovered envelope and is capable to act as optical carrier for later upstream modulation. A consecutive optical coupler 340 splits off a small portion of the signal 392c to provide a signal 394a for a control loop that tunes the spectral response of the N-PFD 330 with the spectrum of the incoming downstream signal.

The bigger part 392d of the output signal from the N-PFD 330 is reflected back towards the upstream direction by a reflective device RDEV 350, which may be a passive reflector but preferably a reflective active component such as a RSOA or an Erbium-doped waveguide amplifier. The RDEV 350 may also include a photo detector, which senses part of the incoming signal 392d. In this case, the RDEV 350 could be an RSOA or a SOA/ REAM or consist of any from the previously mentioned devices with a partial mirror, behind which a suitable photo detector is placed. The reflected signal 392e passes the optical coupler 340 and enters the N-PFD 330 as input signal 392f. As the N-PFD 330 is already adjusted in its spectral transmission, the recovered optical carrier is not suppressed or distorted.

The passed-trough optical carrier 392g enters the REM 360 and is modulated with upstream data. Reflections that arrive from the N-PFD 330 are in crosstalk with the optical carrier 392f after its pass through the N-PFD 330. The mentioned reflections have to be as low as it is specified for an N-PFD 330. The REM 360 might be a suitable physical realization such as a Mach-Zehnder modulator, a SOA, an EAM or an integrated version of SOA and EAM. Although the REM 360 can be limited by physics in its extinction ratio due to transparency conditions of active components, the upstream extinction ratio might be also optimized. The criteria for optimization derived from the upstream penalty due to a limited extinction ratio of the REM 360 and the ability of the N-PFD 330 to erase the upstream data from its input signal 392b. The electrical transmitter TX 361 provides the appropriate electrical driving signal 362 that contains the correct radio frequency data amplitude and also a bias current and/or voltage, depending on the nature of the REM 360. The TX 361 contains electronic signal processing and also higher layer functionalities, and is itself connected to the user interface with line 365, according to an AN standard. The TX 361 has also an interconnection 376 with the RX 371 to provide a method for signalling inside the AN.

The modulated signal 391a that carries the upstream data passes through the optical coupler 320 and enters the ODN 120 as upstream 391b. The control loop for the N-PFD 330 takes either the signal 393 which derives from the upstream 391a or the recovered optical carrier 394a for probing the alignment of the N-PFD 330 with the downstream. If signal 393 is used, the optical coupler 340 is not present in the ONU 300. The CTL 380 that is responsible for providing the electrical driving signal 394c for the N-PFD 330, includes an electronic control circuit and an electrical driver. Photo detectors 381 and 382, and the photo detector included in the RDEV 350 are used to obtain electrical input signals 394b, 395 and 396 for the CTL 380. It may be possible to retrieve only a signal from one of the three photo detectors, discarding the information from the other two sources and the photo detectors by themselves. For the case of discarding photo detector 381, also the optical coupler 340 is discarded. The driving signal 394c depends on the physical realization of the N-PFD 330, which in turn contains appropriate tuning mechanism for aligning its spectral response.

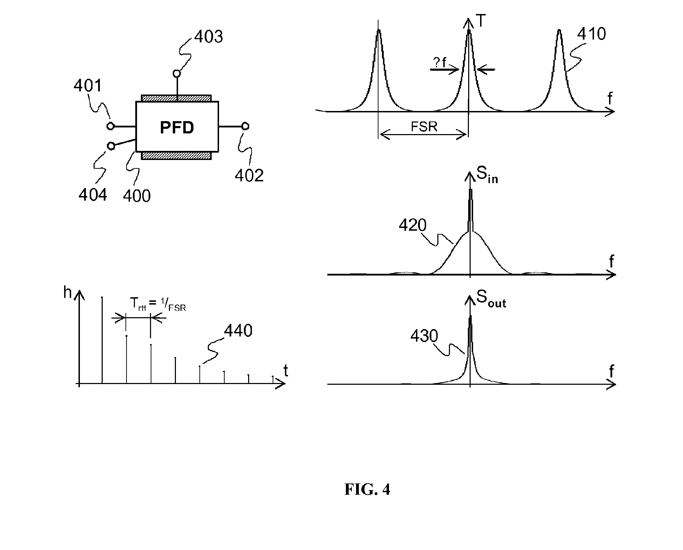

Reference is now made to Figure 4 illustrating periodic filtering device .the PFD 400 is a structure with an optical input 401, an optical output 402, an electrical input 403 and, in general, a reflective port 404. The transfer function 410 for the optical power has a periodicity in its frequency, which is defined by the free spectral range FSR,

$$T(f + FSR) = T(f)$$

The formed comb-like function is further defined by the full-width half maximum FWHM bandwidth $\Delta f$ of its transmission peaks.

The following conditions have to be fulfilled by the PFD:

- the periodic transmission function is given over the whole optical wavelength range in which data transmission is considered

- the FSR is adjusted to the bit rate of the downstream signal, so that colorless operation can be guaranteed

- the center frequency of one of the transmission peaks can be adjusted by proper means to the line spectral component of the spectrum of the downstream signal, to ensure optimal operation of the PFD

- the bandwidth $\Delta f$ is broader than the source line width of the optical transmitter, considering also eventual spectral broadening due to chirp in the downstream transmitter.

The PFD 400 extracts an optical carrier out of the incoming signal spectrum 420, which is shown exemplarily in figure 4 for the suitable modulation format non-return to zero NRZ. Translated to the time domain, the PFD 400 has an impulse response 440 for the optical power which provides an optical memory effect: optical impulses are kept in its power in the PFD 400, which may include a cavity or similar structures, and are passed again to the output 402 after the round trip time $T_{rtt}$ which is a characteristic figure of the PFD 400 and coincides with the inverse of the FSR. Empty spaces in the bit stream are therefore filled up with optical power, recreating a continuous envelope. The impulse response 440 sketched in figure 4 shows a decay, which accounts for the general case of losses inside the PFD 400, depending on the physical realization of the PFD. The output signal spectrum 430 has a suppressed downstream modulation and shows an optical carrier that is suitable for being modulated with upstream data.

Reflections caused by the PFD are present at the output port 404, which may coincide with the signal input 401 for specific realizations of the PFD.

The electrical input 403 is used to ensure optimum performance of the PFD 400, by tuning its physical parameters in a proper way to match the conditions of the incident downstream signal.

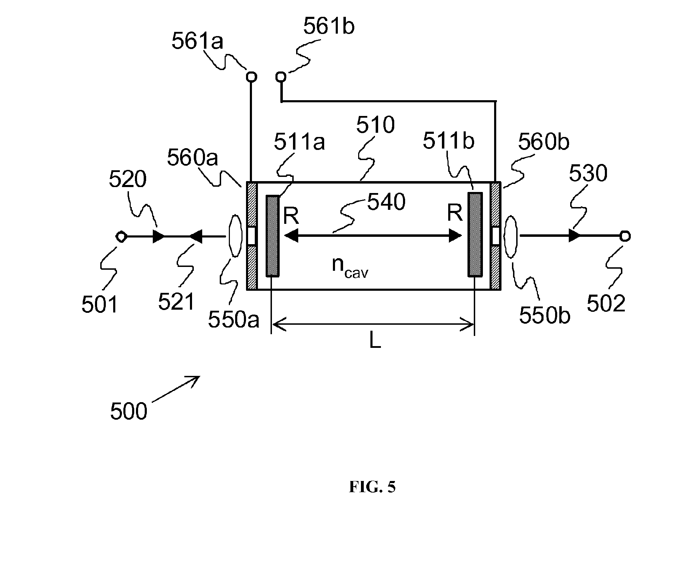

Reference is now made to figure 5 illustrating a previous art implementation of the PFD based on a Fabry-Pérot interferometer, being a good example of an R-PFD embodiment.

The R-PFD 500 comprises an optical cavity 510, electrodes 560(a, b) attached to the optical cavity 510 to change its parameters, and has an optical input 501, an optical output 502 and electrical inputs 561(a, b). The optical signals are coupled into the cavity 510 with the help of means for fibre coupling 550(a, b). The cavity 510 includes two mirrors 511(a, b) that are partially transparent. The optical input 501 and the optical output 502 are attached to the cavity 510 in a proper way. The reflectivity R of the mirrors 511 (a, b) and the length L of the cavity 510 with refractive index $n_{cav}$ are defined according to the parameters of the PFD to match the conditions for downstream suppression. Once the requirements for optimum operation of the PFD are satisfied, the input signal 520 loses most of its downstream patterning when passing through the R-PFD 500 and exits as output signal 530.

While a design with discrete components is possible for the R-PFD 500, an integrated version can be another option. In this case, several optical signals may be carried by waveguides on a photonic integrated circuit instead of having an optical fibre. As the mirrors 511 (a, b) can be formed by little variations of the refractive index of the waveguide, no extra means of fibre coupling 550 (a, b) may be necessary. The cavity 510 contains then a piece of waveguide, with two areas of periodic perturbations of the nominal refractive index, to form the two mirrors. The electrodes 560(a, b) will have to be placed in a proper way along the waveguide. Means of fibre coupling may be needed for the optical input 501 and the optical output 502 if the R-PFD 500 is integrated on a photonic chip that does not contain other parts of the ONU.

Electrodes 560(a, b) attached to a suitable material around the cavity 510 allows for matching the parameters of the cavity to the requirements for optimum downstream suppression. The electrical control signals 561(a, b) are therefore applied to the electrodes 560(a, b).

Due to the reflection of the incident signal 520 and also due to the transmission of the intra-cavity signal 540, there is a signal 521 with non-negligible amount of optical power propagating back towards the optical input 501 of the R-PFD 500. The signal 521 is thereby strong enough to classify this physical realization of the PFD for a certain set of parameters as R-PFD.

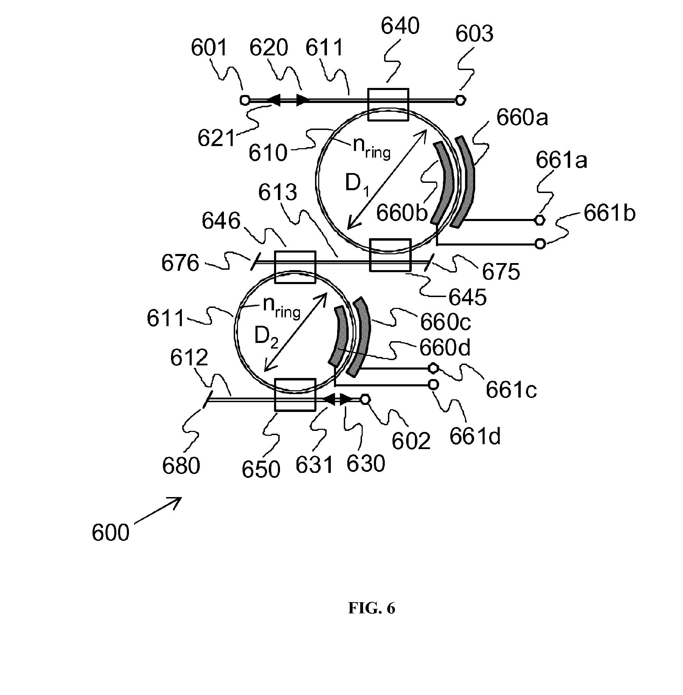

Referring to now to figure 6, a N-PFD 600 has an optical input 601, an optical output 602, a reflective port 603 and electrical inputs 661 (a, b). Optical signal are carried by waveguides 610, 611 and 612. The waveguide 612 has a termination 680 at its end that causes only negligible reflections so that the optical signals 621 (and 630) are not perturbed. Waveguides 610 and 611 form rings. These rings are in connection with waveguides 611 and 612 via optical couplers 640 and 650. Further, these rings are interconnected with a common waveguide 613 via optical couplers 645 and 646. The terminations 675 and 676 of waveguide 613 do not produce reflections of the optical signals that pass the waveguide from the first ring 610 into the second ring 611, and vice versa.

The first ring 610 with its diameter $D_1$ and its refractive index $n_{ring}$ provides a periodic transfer function for the N-PFD 600 between its optical input 601 and waveguide 613, depending also on the coupling ratios of the optical couplers 640 and 645. The FSR of this transfer function is adjusted to the downstream data rate. The second ring 611 has a similar transfer function between waveguide 613 and the optical output 602 of the N-PFD 600, but due to a different diameter $D_2$ and possibly also different coupling ratios of the optical couplers 646 and 650 there are differences, for example in the FSR which is here adjusted to the upstream data rate.

The input signal 620 from the optical input 601 is coupled to the first ring 610, and depending on the optical frequencies of signal 620 a part of its power is coupled via waveguide 613 into the second ring 611. Accordingly, depending on the frequency composition of this signal in waveguide 613, a part of the signal is coupled via the second ring 611 as output signal 630 to the optical output 602. Accordingly, signal 631 which is propagating in the opposite direction and enters the second ring 611 via waveguide 612 is coupled partially into the first ring 610 and from there to waveguide 611 and appears as signal 621.

Electrodes 660(a, b) that are located aside part of the ring 610 in a proper way, are used to modify the overall transfer function of the N-PFD 600. Similarly, electrodes 660(c, d) are located along the ring 611 in a proper way, and are used to modify the overall transfer function of the N-PFD 600 in terms of suppressing the upstream modulation that was introduced before the first pass of the N-PFD 600, as it is intended for a N-PFD. All electrodes 660(a, b, c, d) are in turn connected to an electrical interface 661 (a, b, c, d).

Further rings can be added to each of the present rings in a proper way to enhance the functionality of the N-PFD.

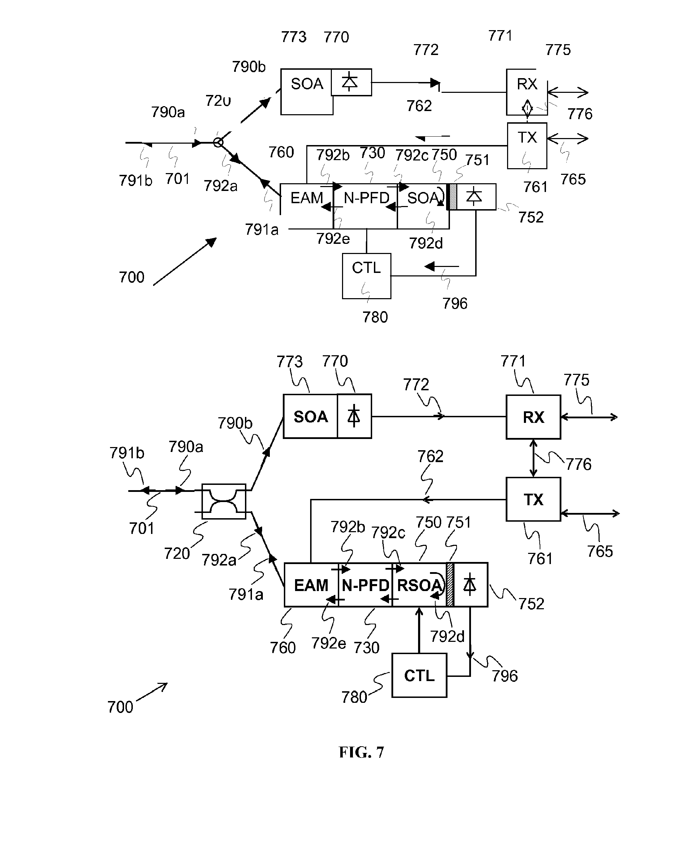

Reference is now made to figure 7 illustrating a simplified embodiment of the ONU module 700 for integration of the electro-optic elements in a chip.

Line 701 connects the ONU 700 to the ODN 120 of the AN 100. The incoming downstream is represented by 790(a, b) and the upstream by 791 (a, b). An integrated optical coupler 720 splits off a part of the downstream 790a and delivers this part 790b to the optical photo receiver 770, which contains a photo detector such as a PIN diode or avalanche photo diode and may include a SOA 773 as optical preamplifier. The detected electrical signal 772 is fed to the electrical receiver 771. This in turn contains methods for electrical signal conditioning and higher layer functionalities. The interconnection to the user interface that is compliant with a AN standard is made via line 775.

The other part of the downstream signal is relayed as signal 792a to pass the electro-absorption modulator (EAM) 760 or an integrated version of EAM and SOA. The EAM 760 is used in a bidirectional way, so upstream data is already imprinted onto the downstream signal. This modulated signal 792b enters the N-PFD 730, which causes only low reflections or no reflections at all, and removes any patterning from the downstream and upstream data from the signal 792b as previously explained in previous figures.

The output signal 792c of the N-PFD 730 has already a recovered envelope and is capable to act as optical carrier for later upstream modulation. This optical carrier 792c is amplified by a version of the previously described reflective device (RDEV) 350 that is more suitable for integration on a chip. Here a RSOA 750, amplifies the optical carrier and either the RSOA 750, or an integrated version of SOA and REAM, or a back-mirror 751 photo detector 752 senses part of the incoming signal 792c for providing a signal 796 to the control loop 780 that tunes the spectral response of the N-PFD 730 with the spectrum of the incoming downstream signal.

The reflected signal 792d passes through the N-PFD 730 without distortion it is already adjusted in its spectral transmission. The passed-trough optical carrier 792e enters the EAM 760 and is modulated with upstream data. The EAM 760 might be either an electro-absorption modulator EAM or an integrated version of SOA and EAM. The electrical transmitter TX 761 provides the appropriate electrical driving signal 762 containing the upstream data plus pre-distortion if required and bias current and/or voltage. The TX 761 contains electronic signal processing and also higher layer functionalities, and is itself connected to the user interface with line 765, according to a AN standard. The TX 761 may also have an interconnection 776 with the RX 771 to provide a method for signalling inside the AN. The signal 791a that carries the upstream data passes through the optical coupler 720 and enters the ODN 120 as upstream 791b.

**Claims**

1.  **An optical network unit** ONU (200) for data transmission in optical networks with optical carrier recovery by means of periodic optical filtering; wherein the ONU (130, 200) comprises:

    a) a first optical coupler (220) splits an incident signal into a downstream part and another part for being remodulated,
    b) a photo detector (270, 282) for reception of the said downstream which is given in an intensity modulation format, may be a PIN diode, avalanche photo diode APD or an integrated solution of semiconductor optical amplifier and PIN diode SOA+PIN,
    c) periodic filtering device PFD (230, 400) with a free spectral range FSR adjusted to a certain channel spacing matched to a wavelength grid, that may cause reflections in backward signal propagation direction, used for reducing the said downstream pattern,
    d) a controller CTL (280) to tune the periodic filtering device with a second optical coupler (240) to split of part of the signal deriving from the PFD, also its own photo detector (281) to gain an electrical signal, and the necessary driving circuitry,
    e) an optical reflective intensity remodulator REM (260) to apply upstream modulation,
    f) an optical circulator to interconnect the bi-directional interface of the REM (260) with the outgoing signal of the said PFD (230, 400) and towards the output of the ONU (130, 200),
    g) another optical circulator to interconnect the bi-directional input of the ONU (130, 200) with the said first optical coupler (220) and the output of the said circulator in f), and
    h) an electronic receiver as well as transmitter that provides a standardized interface to the customer.

2.  **Optical network unit** ONU (130, 200) according to claim 1; wherein the REM (260) can include a reflective semiconductor optical amplifier RSOA, a reflective electro-absorption modulator REAM or an integrated combination of semiconductor optical amplifier and reflective electro-absorption modulator SOA/REAM.

3.  **Optical network unit** ONU (130, 200) according to claim 1; wherein the PFD (230, 400) includes a free spectral range FSR which is wide enough to have only one passband per downstream channel.

4.  **Optical network unit** ONU (130, 300) according to claim 1; wherein the ONU (130, 300) comprises the periodic filtering device PFD (330, 400) with a free spectral range FSR adjusted to a certain channel spacing matched to a wavelength grid, that does cause none or negligible reflections in backward signal propagation direction, used for reducing the said downstream pattern; a reflective device RDEV (350) after the PFD (330, 400), which reflects the output signal of the PFD (330, 400) back towards its input port.

5.  **Optical network unit** ONU (130, 300) according to claim 4; wherein the PFD (330, 400) can included a Mach-Zehnder delay interferometer or coupled ring resonators.

6.  **Optical network unit** ONU (130, 300) according to claim 4; wherein the REM (360) can included a Mach-Zehnder modulator, a semiconductor optical amplifier SOA or an electro-absorption modulator EAM.

7.  **Optical network unit** ONU (130, 300) according to claim 4; wherein the RDEV (350) can include a semiconductor optical amplifier SOA, an Erbium-doped waveguide amplifier, a passive mirror, an optical coupler in loopback configuration or a an integrated combination of semiconductor optical amplifier and reflective electro-absorption modulator SOA/REAM.

8.  **Optical network unit** ONU (130, 300) according to claim 4; wherein a photo detector is placed behind a partial mirror or at a tap of the optical coupler, respectively.

9.  **Optical network unit** ONU (130, 300) according to claim 7; wherein the PFD (400) includes a free spectral range FSR which is wide enough to have only one passband in the operated waveband.

10. **Optical network unit** ONU (130, 700) according to claim 1; wherein the ONU (130, 700) comprises an optical amplifier and a photo detector for reception of the downstream which is given in an intensity modulation format, and may be a combination of a SOA (773) and PIN (770) or SOA (773) and APD (770) or SOA (773) and EAM (770); a section integrating a amplitude modulator can being an electro-absorption modulator EAM (760); semiconductor optical amplifier SOA can being a periodic filtering device (730), an integrated optical amplifier (750) and a partial mirror with a back mirror photo detector (752); a controller to tune the PFD (400, 730) using the signal from the back mirror photo detector for adjusting the PFD (400, 730).

11. **Optical network unit** ONU (130, 700) according to claim 10; wherein the amplitude modulator includes a semiconductor optical amplifier SOA.

12. **Optical network unit** ONU (130, 700) according to claim 10; wherein the partial mirror and the back mirror photo detector can be substituted by a reflective electro absorption modulator REAM.

13. **Optical network unit** ONU (130, 700) according to claim 10; wherein all the components of the ONU (130, 700) except the electronic receiver, the electronic transmitter and the controller are integrated in a single chip.

14. **A method** for enabling bidirectional data communication using a single optical carrier modulated in intensity and an optical network unit (130, 200) at user premises comprising of a receiving and transmitting optical system based on:

> a) receiving by means an optical receiver an incident intensity modulated signal,
> b) suppressing by means of a periodic filtering device the modulation information of the incident intensity modulated signal for recovering an optical carrier,
> c) modulating by means of a modulator the said recovered optical carrier with data to establish a bidirectional data transmission.

**Amended claims in accordance with Rule 137(2) EPC.**

> **1. An optical network unit** ONU for bi-directional data transmission in optical networks ODN (120) with optical carrier recovery by means of periodic optical filtering; **characterised in that** the ONU (130, 200, 300) comprises:
>
>> a) a first optical coupler (220, 320) is adapted to split an incident signal (290, 390) received in a bi-directional input of the ONU (130, 200, 300) into a downstream reception (290, 390) part and an upstream carrier (292, 392) for being remodulated,
>> b) a photo detector (270, 370) is adapted to receive the downstream (290, 390) part modulated in intensity through a device of the kind a PIN diode, avalanche photo diode APD or an integrated solution of semiconductor optical amplifier and PIN diode SOA+PIN, , and an output of the photo detector (270, 370) is connected to a receiver (271, 371),

>> c) a periodic filtering device PFD (230, 400) with a free spectral range FSR adjusted to a certain channel spacing matched to a wavelength grid, , the periodic filtering device PFD (230, 400) is adapted to reduce reflections of the downstream (290) part by using a signal (293) in backward propagation direction,
>> d) a controller CTL (280) is adapted to tune the periodic filtering device PFD (230, 400) with a second optical coupler (240) that splits of an incoming downstream (292) part received from the PFD (230, 400),
>> e) an optical circulator (250) is adapted to interconnect a bi-directional interface of an optical reflective intensity remodulator REM (260), which is arranged to modulate the downstream (292) part with data to produce, at the same optical downstream carrier, an upstream data modulated carrier (291, 391), and
>> f) an optical circulator (210) is adapted to interconnect the bi-directional input of the ONU (130, 200) with the optical coupler (220) and an output of the optical circulator (250); to transmit the upstream data modulated carrier (291, 391) along a fibre (140) of the optical distribution network ODN (120) from which the incident signal (290, 390) was received.

**2. Optical network unit** ONU (130, 200) according to claim 1; wherein the REM (260) is of the kind a reflective semiconductor optical amplifier RSOA, a reflective electro-absorption modulator REAM or an integrated combination of semiconductor optical amplifier and reflective electro-absorption modulator SOA/REAM.

**3. Optical network unit** ONU (130, 200) according to claim 1; wherein the PFD (230, 400) includes a free spectral range FSR which is wide enough to have only one passband per downstream channel.

**4. Optical network unit** ONU (130, 300) according to claim 1; wherein the ONU (130, 300) comprises the periodic filtering device PFD (330, 400) with a free spectral range FSR adjusted to a certain channel spacing matched to a wavelength grid, that does cause none or negligible reflections in backward signal propagation direction, used for reducing the said downstream pattern; a reflective device RDEV (350) after the PFD (330, 400), which reflects the output signal of the PFD (330, 400) back towards its input port.

**5. Optical network unit** ONU (130, 300) according to claim 4; wherein the PFD (330, 400) can include a Mach-Zehnder delay interferometer or coupled ring resonators.

**6. Optical network unit** ONU (130, 300) according to claim 4; wherein the REM (360) is of the kind a Mach-Zehnder modulator, a semiconductor optical amplifier SOA or an electro-absorption modulator EAM.

**7. Optical network unit** ONU (130, 300) according to claim 4; wherein the RDEV (350) is of the kind a semiconductor optical amplifier SOA, an Erbium-doped waveguide amplifier, a passive mirror, an optical coupler in loopback configuration or a an integrated combination of semiconductor optical amplifier and reflective electro-absorption modulator SOA/REAM.

**8. Optical network unit** ONU (130, 300) according to claim 4; wherein a photo detector is placed behind a partial mirror or at a tap of the optical coupler, respectively.

**9. Optical network unit** ONU (130, 300) according to claim 7; wherein the PFD (400) includes a free spectral range FSR which is wide enough to have only one passband in the operated waveband.

**10. Optical network unit** ONU (130, 700) according to claim 1; wherein the ONU (130, 700) comprises an optical amplifier and a photo detector for reception of the downstream which is given in an intensity modulation format, and may be a combination of a SOA (773) and PIN (770) or SOA (773) and APD (770) or SOA (773) and EAM (770); a section integrating a amplitude modulator can being an electro-absorption modulator EAM (760); a periodic filtering device (730), an integrated optical amplifier (750) and a partial mirror with a back mirror photo detector (752); a controller to tune the PFD (400, 730) using the signal from the back mirror photo detector for adjusting the PFD (400, 730).

**11. Optical network unit** ONU (130, 700) according to claim 10; wherein the amplitude modulator includes a semiconductor optical amplifier SOA.

**12. Optical network unit** ONU (130, 700) according to claim 10; wherein the partial mirror and the back mirror photo detector can be substituted by a reflective electro absorption modulator REAM.

**13. Optical network unit** ONU (130, 700) according to claim 10; wherein all the components of the ONU (130, 700) except the electronic receiver, the electronic transmitter and the controller are integrated in a single chip.

EP 2 367 306 A1

FIG. 1

FIG 2

**FIG. 3**

**FIG. 4**

**FIG. 5**

**FIG. 6**

**FIG. 7**

Europäisches
Patentamt

European
Patent Office

Office européen
des brevets

**EUROPEAN SEARCH REPORT**

Application Number

EP 10 38 2063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRESI M ET AL: "A full-duplex symmetric WDM-PON featuring OSSB downlink modulation with optical down-conversion" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031391641 ISBN: 978-1-55752-856-8 * page 1, paragraph 1 - page 1, paragraph 2 * * page 2, paragraph 2; figure 1 * | 1-14 | INV. H04B10/26 |
| X | WO 2010/000296 A1 (ERICSSON TELEFON AB L M [SE]; CAVALIERE FABIO [IT]) 7 January 2010 (2010-01-07) * page 1, line 10 - page 1, line 25 * * page 4, line 3 - page 5, line 16; figures 5,6 * | 1-14 | |
| A | WO 2008/111034 A1 (UNIV COLLEGE CORK NAT UNIV IE [IE]; CHOW CHI WAI [TW]; TALLI GIUSEPPE) 18 September 2008 (2008-09-18) * abstract; figure 6 * | 1-14 | **TECHNICAL FIELDS SEARCHED (IPC)** H04B |
| A | EP 0 717 516 A1 (AT & T CORP [US]; PERRIER PHILIPPE ANDRE [FR]) 19 June 1996 (1996-06-19) * abstract; figure 1 * | 1-14 | |

The present search report has been drawn up for all claims

| Place of search | Date of completion of the search | Examiner |
|---|---|---|
| Munich | 10 August 2010 | Phillips, Simon |

EPO FORM 1503 03.82 (P04C01)

**ANNEX TO THE EUROPEAN SEARCH REPORT
ON EUROPEAN PATENT APPLICATION NO.**

EP 10 38 2063

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2010

| Patent document cited in search report | | Publication date | Patent family member(s) | | Publication date |
|---|---|---|---|---|---|
| WO 2010000296 | A1 | 07-01-2010 | NONE | | |
| WO 2008111034 | A1 | 18-09-2008 | EP | 2137850 A1 | 30-12-2009 |
| | | | IE | 20080187 A1 | 15-10-2008 |
| | | | US | 2010111543 A1 | 06-05-2010 |
| EP 0717516 | A1 | 19-06-1996 | JP | 8237206 A | 13-09-1996 |
| | | | US | 5572612 A | 05-11-1996 |

EPO FORM P0459

For more details about this annex : see Official Journal of the European Patent Office, No. 12/82